# FASCICULE DE BREVET EUROPEEN

(11) **EP 0 655 369 B1**
(45) Date de publication et mention de la délivrance du brevet: **19.03.1997**
(21) Numéro de dépôt: 94402653.3
(22) Date de dépôt: 21.11.1994
(51) Int. Cl.: B60R 21/20

(54) **Procédé de fabrication d'une pièce d'équipement, notamment pour véhicule automobile**
Verfahren zum Herstellen eines Ausrüstungsstückes, insbesondere für ein Kraftfahrzeug
Method of producing an equipment piece, especially for a motor vehicle

(30) Priorité: 25.11.1993 FR 9314121
(43) Date de publication de la demande: 31.05.1995
(73) Titulaire: ECIA - EQUIPEMENTS ET COMPOSANTS POUR L'INDUSTRIE AUTOMOBILE, F-25400 Audincourt (FR)
(72) Inventeur: Xolin, Frédéric, F-25400 Audincourt (FR); Goisset, Bernard, F-25310 Blamont (FR)
(74) Mandataire: Habasque, Etienne Joel Jean-François

(56) Documents cités:
- DE-A- 3 116 538
- DE-A- 3 545 028
- GB-A- 2 241 663
- GB-A- 2 244 449
- US-A- 5 215 330

## Description

La présente invention concerne un procédé de fabrication d'une pièce d'équipement, notamment pour véhicule automobile.

Plus particulièrement, l'invention se rapporte aux procédés de fabrication des pièces d'équipement de véhicules, qui comprennent au moins un sac gonflable, telles que par exemple des pièces d'équipement disposées au niveau des planches de bord des véhicules ou des volants de direction de ceux-ci.

Les procédés de fabrication de ce type de pièces d'équipement, connus dans l'état de la technique, consistent essentiellement à monter la pièce d'équipement sur le véhicule, à disposer le sac gonflable dans une coupelle de l'armature de cette pièce, puis à fixer sur cette armature, un garnissage qui a été réalisé indépendamment du reste de la pièce.

Ceci est le cas par exemple des coussins centraux des volants de direction des véhicules pour lesquels les différentes opérations de montage sont réalisées chez les constructeurs de véhicules.

On conçoit que ces différentes opérations de montage nécessitent l'assemblage des différents éléments de cette pièce les uns à la suite des autres et que ces opérations présentent un certain nombre d'inconvénients, notamment au niveau du temps requis pour cet assemblage et de la présence d'organes de fixation tels que des rivets ou autres pour la fixation de ces éléments sur le reste de l'armature de la pièce.

Le but de l'invention est donc de résoudre ces problèmes.

A cet effet, l'invention a pour objet un procédé de fabrication d'une pièce d'équipement, notamment pour véhicule automobile, comprenant une armature munie d'une coupelle ouverte de réception d'un sac gonflable à l'état plié et d'un garnissage, caractérisé en ce qu'il comporte les étapes suivantes :
- on dispose au moins le sac gonflable à l'état plié dans la coupelle;
- on obture l'ouverture de la coupelle à l'aide d'un matériau d'étanchéité déchirable lors du gonflage du sac;
- on dispose l'armature avec sa coupelle munie du sac et du matériau d'étanchéité dans un moule de fabrication du garnissage par injection de matière plastique; et
- on injecte de la matière plastique dans le moule pour former le garnissage.

Selon un autre aspect, l'invention a également pour objet une pièce d'équipement de véhicule automobile obtenue selon ce procédé.

L'invention sera mieux comprise à la lecture de la description qui va suivre, donnée uniquement à titre d'exemple et faite en se référant aux dessins annexés, sur lesquels :

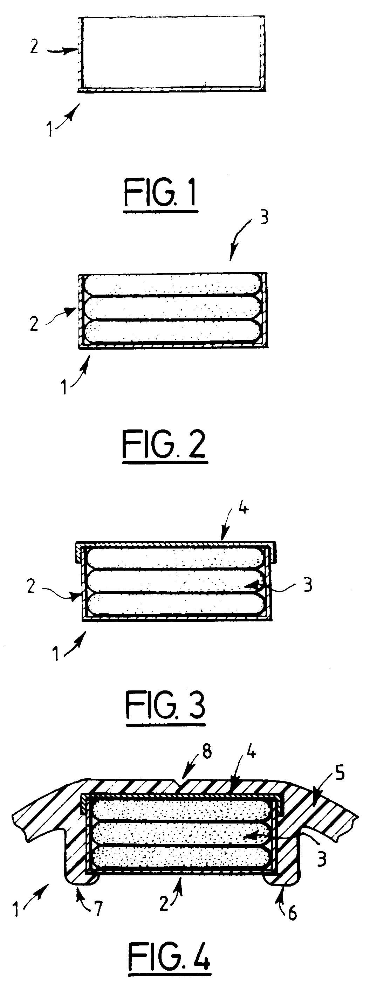

- les Fig.1 à 4 illustrent les différentes étapes d'un procédé de fabrication d'une pièce d'équipement tel qu'un coussin central de volant de direction, selon l'invention.

Ainsi qu'on peut le voir sur ces figures, une pièce d'équipement de véhicule automobile comporte une armature de pièce destinée à recevoir au moins un sac gonflable dans une coupelle ouverte de réception de ce sac à l'état plié, et peut être adaptée pour former par exemple un coussin central d'un volant de direction d'un véhicule ou encore une pièce d'équipement destinée à être intégrée dans la planche de bord du véhicule, par exemple en regard du passager avant de celui-ci.

L'armature de cette pièce d'équipement, désignée de façon générale par la référence 1 sur la figure 1, comporte une coupelle ouverte 2 de réception du sac gonflable à l'état plié et suivant le procédé selon l'invention, tel qu'illustré sur ces figures 1 à 4, la première étape de ce procédé consiste à disposer au moins le sac gonflable désigné par la référence générale 3 sur la figure 2 dans la coupelle 2 de l'armature 1.

On notera à cet égard qu'un générateur de gaz peut également être disposé dans cette coupelle, de façon classique, ce générateur de gaz étant relié au reste des circuits de contrôle/commande du véhicule par l'intermédiaire par exemple de moyens de connexion électriques.

Cependant, il est connu dans l'état de la technique que le générateur de gaz peut également être disposé dans un autre organe du véhicule, tel que par exemple l'arbre de direction dans le cas où la pièce d'équipement est un coussin central de volant ou encore dans une poutre de renfort de la planche de bord dans le cas où la pièce d'équipement est disposée dans la planche de bord du véhicule en regard du passager avant.

Une fois que ce sac gonflable et éventuellement le générateur de gaz sont disposés dans la coupelle 2, on obture l'ouverture de cette coupelle à l'aide d'un matériau d'étanchéité déchirable lors du gonflage du sac, comme cela est illustré sur la Fig.3.

Ce matériau d'étanchéité peut par exemple se présenter sous la forme d'un film 4 tendu sur l'ouverture de la coupelle 2 au-dessus du sac gonflable 3.

Le bord périphérique de ce film est fixé sur les bords correspondants de la coupelle par tous moyens appropriés comme par exemple par l'intermédiaire d'un jonc élastique ou autre.

Ensuite, on dispose l'armature de pièce avec sa coupelle munie du sac gonflable 3 et du film d'étanchéité 4 dans un moule de fabrication du garnissage de la pièce d'équipement par injection de matière plastique et on injecte de la matière plastique dans le moule pour former le garnissage désigné par la référence générale 5 sur la Fig.4.

Le moule de fabrication peut être conçu pour former des pattes d'accrochage 6 et 7 du garnissage sur l'armature 2 pour obtenir une bonne liaison entre le garnissage et celle-ci.

Bien entendu, le moule peut également être adapté pour former des zones de rupture préférentielle 8 de ce garnissage, en regard de l'ouverture de la coupelle, ces zones se déchirant lors du gonflage du sac comme cela est classique.

On conçoit alors que ce procédé de fabrication permet d'obtenir une pièce d'équipement munie d'un garnissage en matière plastique, qui peut être fixée directement sur un autre organe du véhicule et qui est livrée chez les constructeurs de véhicules à l'état assemblé, ce qui permet de résoudre les problèmes de montage mentionnés précédemment.

## Revendications

1. Procédé de fabrication d'une pièce d'équipement, notamment pour véhicule automobile, comprenant une armature (1) munie d'une coupelle ouverte (2) de réception d'un sac gonflable (3) à l'état plié et d'un garnissage (5), caractérisé en ce qu'il comporte les étapes suivantes:
- on dispose au moins le sac gonflable (3) à l'état plié dans la coupelle (2);
- on obture l'ouverture de la coupelle (2) à l'aide d'un matériau d'étanchéité (4) déchirable lors du gonflage du sac;
- on dispose l'armature avec sa coupelle (2) munie du sac (3) et du matériau d'étanchéité (4) dans un moule de fabrication du garnissage par injection de matière plastique; et
- on injecte de la matière plastique dans le moule pour former le garnissage (5).

2. Procédé selon la revendication 1, caractérisé en ce qu'on obture l'ouverture de la coupelle à l'aide d'un film (4) de matériau d'étanchéité.

## Claims

1. A method of producing a piece of equipment, in particular for a motor vehicle, comprising a frame (1) provided with an open dish-shaped receptacle (2) for accommodating an inflatable bag (3) in a folded state and with a lining (5), characterised in that it comprises the following steps:
- at least the inflatable bag (3) is arranged in the folded state in the dish-shaped receptacle (2);
- the opening of the dish-shaped receptacle (2) is sealed using a sealing compound (4) which can be torn when the bag inflates;
- the frame with its dish-shaped receptacle (2) provided with the bag (3) and the sealing compound (4) is arranged in a mould for producing the lining by injection of plastic material; and
- the plastic material is injected into the mould to form the lining (5).

2. A method according to Claim 1, characterised in that the opening of the dish-shaped receptacle is sealed using a film (4) of sealing compound.

## Patentansprüche

1. Verfahren zur Herstellung eines Ausrüstungsteils, insbesondere für Kraftfahrzeuge, mit einer Armartur (1), welche mit einer offenen Schale (2) zur Aufnahme eines Gaskissens (3) im gefalteten Zustand und einer Garnitur (5) versehen ist, dadurch gekennzeichnet, daß es die folgenden Verfahrensschritte aufweist:
- man ordnet wengistens das Gaskissen (3) im gefalteten Zustand in der Schale (2) an,
- man verschließt die Öffnung der Schale (2) mittels eines Dichtungsmaterials (4), welches beim Aufblasen des Gaskissens reißbar ist,
- man ordnet die Armartur mit ihrer mit dem Kissen (3) und dem Dichtungsmaterial (4) versehenen Schale (2) in einer Form zur Herstellung der Garnitur durch Spritzgießen von Kunststoff an, und
man spritzt den Kunststoff in die Form zur Ausbildung der Garnitur (5).

2. Verfahren nach Anspruch 1, dadurch gekennzeichnet, daß man die Öffnung der Schale mittels einer Folie (4) aus Dichtungsmaterial verschließt.
